# EUROPEAN PATENT SPECIFICATION

(11) **EP 2 380 768 B1**
(45) Date of publication and mention of the grant of the patent: **22.05.2013**
(21) Application number: 11162194.2
(22) Date of filing: 13.04.2011
(51) Int. Cl.: B60L 11/00

(54) **Power supply source switching apparatus for hybrid engine generator**
Stromversorgungsquellenschaltvorrichtung für Hybridmotorgenerator
Appareil de commutation de source d'alimentation électrique pour générateur de moteur hybride

(30) Priority: 26.04.2010 JP 2010100960
(43) Date of publication of application: 26.10.2011
(73) Proprietor: Honda Motor Co., Ltd., Tokyo 107-8556 (JP)
(72) Inventor: Ogawa, Makoto, Saitama 351-0193 (JP); Ueno, Masanori, Saitama 351-0193 (JP)
(74) Representative: Herzog, Markus

(56) References cited:
- JP-A- 2000 092 603
- JP-A- 2003 284 258
- JP-A- 2004 048 840
- US-A- 5 373 196
- US-B1- 6 879 053

## Description

### Technical Field

The present invention relates to a power supply source switching apparatus for a hybrid engine generator and particularly relates to a power supply source switching apparatus for a hybrid engine generator capable of switching between a battery output and an output of an alternator driven by an engine without stopping the generator.

### Background Art

A hybrid engine generator that includes a generator, which is driven by an engine, and a battery is known. A hybrid engine generator having a controller that enables selection between a generator and a storage battery as a power supply source by enabling supply of power from both the generator and the storage battery when a power assist mode switch is on, switching from the generator to the storage battery when the power assist mode switch is off and a power supply source changeover switch is on, and switching from the storage battery to the generator when both the power assist mode switch and the power supply source changeover switch are off is proposed in Japanese Patent Publication No. 3941927.

US 5 373 196 discloses a power supply source switching apparatus.

US 6 879 053 discloses that the power is restricted when the speed of the engine rapidly decreases.

### Summary of Invention

### Technical Problem

With a conventional hybrid engine generator, although the power supply source is selected by the changeover switch, each time the power supply source is to be switched, the changeover switch must be operated upon stopping the generator output. Operation is thus complicated and there is an issue of poor usability

An object of the present invention is to provide, in response to the above issue, a power supply source switching apparatus for a hybrid engine generator that enables switching between power supply sources to be performed without using a changeover switch and while maintaining an output of the generator.

### Solution to Problem

A first feature of the present invention is a power supply source switching apparatus for a hybrid power generator, in accordance with claim 1.
The hybrid power generator includes a battery, an alternator driven by an engine, a rectifier unit rectifying an output of the alternator, a DC-DC converter stepping up an output voltage of the battery, and an inverter unit converting outputs of the rectifier unit and the DC-DC converter to AC and outputting the AC as a generator output, the power supply source switching apparatus for a hybrid power generator comprising: a load output detecting unit detecting a load output of the generator; an engine starting unit starting the engine by the output of the battery; and a generated power restricting unit starting the engine and switching from power supplying from the battery to power generation by the alternator at a point in time at which the load output reaches an upper limit of an allowable power of the DC-DC converter, and suppressing the output of the inverter unit during the starting of the engine for the switching so that the generator output does not exceed an allowable power range of the DC-DC converter.

A second feature of the present invention is that the rectifier unit is used in common as a drive inverter for starting the engine by the output of the DC-DC converter, and the generated power restricting unit is arranged to perform output restriction of the battery by subtracting power, corresponding to power consumed for engine starting, from the battery output.

A third feature of the present invention is that the engine is stopped and switching to the output from the battery is performed when the load output falls below the allowable output range of the DC-DC converter.

### Advantageous Effects of Invention

According to the first to third aspects of the present invention, when the load output exceeds the power capacity (allowable power) of the DC-DC converter, the generator output is lowered just temporarily during engine startup in consideration of the power capacity and an engine starting power to enable the output power of the battery to be supplied in a well-balanced manner to the load and the alternator that serves as an engine starter. Also, usability is improved because the switching between power supply means can be performed while maintaining the generator output. Further, power supplying can be maintained within the power capacity of the DC-DC converter so that use of large-sized DC-DC converter can be avoided and low noise and low fuel consumption can be achieved by continuous, smooth operation without interruption of the generator output.

### Brief Description of Drawings

FIG 1 is a block diagram of a system arrangement of a hybrid engine generator that includes a power supply source switching apparatus according to an embodiment of the present invention.
FIG. 2 is a circuit diagram of an output control apparatus of the hybrid engine generator shown in FIG 1.
FIG 3 is a circuit diagram of an isolation-type DC-DC converter.
FIG 4 is a flowchart of an operation of the power supply source switching apparatus.
FIG 5 is a flowchart of an operation of a generator output suppression control apparatus.
FIG 6 is an operation timing chart of the power supply source switching apparatus.
FIG. 7 is a block diagram of principal functions of the power supply source switching apparatus.

### Description of Embodiments

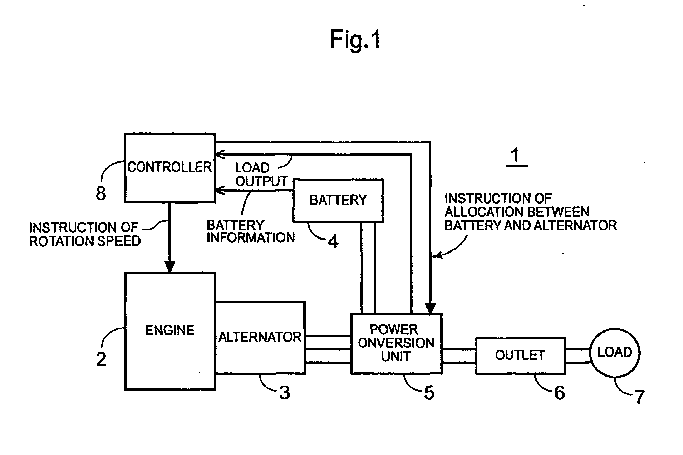

An embodiment of the present invention shall now be described with reference to the drawings. FIG 1 is a system arrangement diagram of a hybrid engine generator that includes an output control apparatus according to an embodiment of the present invention. In FIG 1, the hybrid engine generator 1 includes an alternator 3 coupled to an engine 2 that is a first power source, and a battery 4 that is a second power source. The alternator 3 is a motor-generator that is driven by the engine 2 to generate power and can also be operated as a starting motor for the engine 2 and is arranged, for example, from a three-phase multipolar magnetic generator.

Output sides of the alternator 3 and the battery 4 are connected to a power conversion unit 5, and an output side of the power conversion unit 5 is connected to an output terminal (for example, an outlet) 6. A load 7 is connected to the outlet 6.

A controller 8 includes a microcomputer, detects a load output and battery information, such as a remaining capacity of the battery 4, etc., and instructs output allocation between the battery 4 and the alternator 3 to the power conversion unit 5 and a rotation speed to the engine 2.

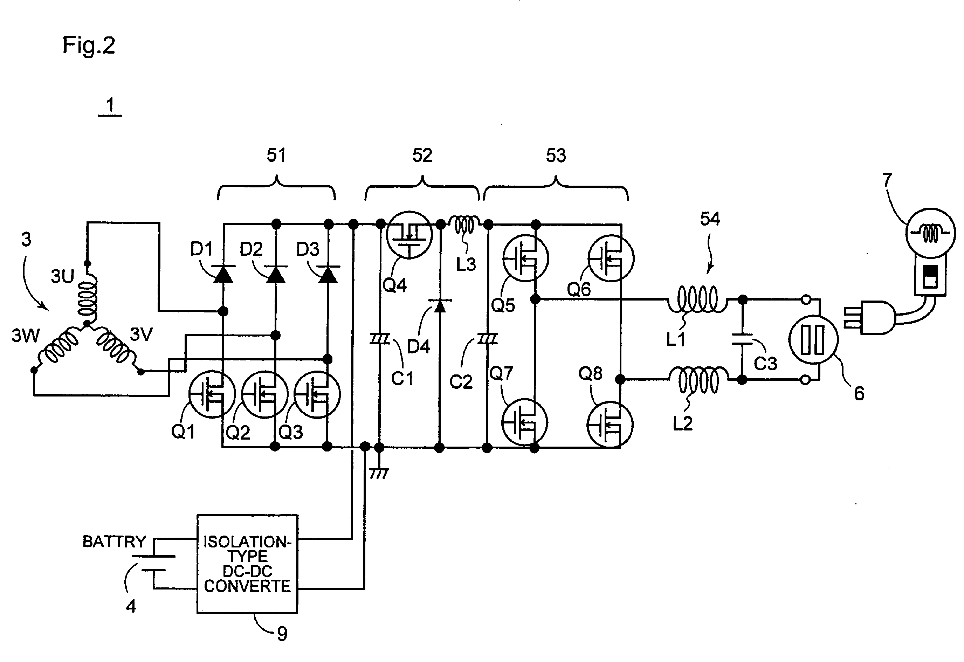

FIG 2 is a specific circuit diagram of the hybrid engine generator 1. The power conversion unit 5 includes a rectifier unit 51, a DC unit 52, an inverter unit 53, and a waveform shaping circuit 54. The rectifier unit 51 is a hybrid bridge rectifier circuit that includes diodes D1, D2, and D3 and switching elements (hereinafter explained as "FETs") Q1, Q2, and Q3 that are bridge-connected. A winding 3U of the alternator 3 is connected to a junction of the diode D1 and the FET Q1, a winding 3V is connected to a junction of the diode D2 and the FET Q2, and a winding 3W is connected to a junction of the diode D3 and the FET Q3, respectively.

The rectifier unit 51 that is thus arranged rectifies and supplies the output of the alternator 3 to the DC unit 52 and also functions as a drive inverter that converts a DC output voltage of the battery 4 to a three-phase AC voltage by on/off control of the FETs Q1 to Q3 and applies the AC voltage to the alternator 3.

The battery 4 is connected between the rectifier unit 51 and DC unit 52 via an isolation-type DC-DC converter 9. The isolation-type DC-DC converter 9 is a bidirectional DC-DC converter between the battery 4 and the rectifier unit 51 and provides power to the battery 4 and the rectifier unit 51 bidirectionally and, as shall be described below, is arranged from a primary side and a secondary side that are connected via an isolation unit (transformer).

The DC unit 52 is a switching converter (a step-down type in the present embodiment) and includes an FET Q4, a choke coil L3, capacitors C1 and C2, a diode D4, etc. The inverter unit 53 is arranged by bridge connection of four FETs Q5, Q6, Q7, and Q8. An output of the inverter unit 53 is connected to the waveform shaping circuit 54, which is arranged from coils L1 and L2 and a capacitor C3. The FETs Q1 to Q3, Q4, and Q5 to Q8 is controlled by instructions from the controller 8.

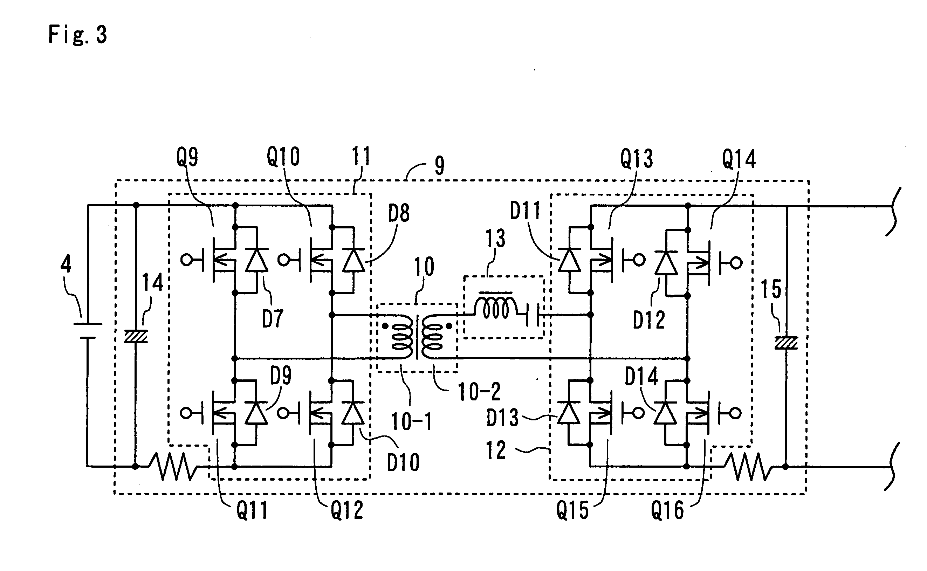

FIG 3 is a circuit diagram of an arrangement example of the isolation-type DC-DC converter 9. The isolation-type DC-DC converter 9 includes a transformer 10 having a primary low voltage side winding 10-1 and a secondary high voltage side winding 10-2. A step-up ratio of the isolation-type DC-DC converter 9 is determined by a winding ratio of the low voltage side winding 10-1 to the high voltage side winding 10-2.

A low voltage side switching unit 11 is inserted at the low voltage side winding 10-1 side and a high voltage side switching unit 12 is inserted at the high voltage side winding 10-2 side. The low voltage side switching unit 11 is arranged, for example, by bridge connection of four FETs Q9, Q10, Q11, and Q12, and the high voltage side switching unit 12 is likewise arranged by bridge connection of four FETs Q13, Q14, Q15, and Q16.

Diodes D7, D8, D9, and D10 and diodes D11, D12, D13, and D14 are respectively connected in parallel to the FETs Q9 to Q16 of the low voltage side switching unit 11 and the high voltage side switching unit 12. These diodes may be parasitic diodes of the FETs, or may be independently connected diodes parallel to the FETs. Together with the rectifier elements D7 to D14 that are connected in parallel, the low voltage side switching unit 11 and the high voltage side switching unit 12 may be considered as being switching/rectifier units, respectively.

An LC oscillator circuit 13 is inserted at the high voltage side winding 10-2 side of the transformer 10. The LC oscillator circuit 13 makes a current, which flows when at least one of either the low voltage side switching unit 11 or the high voltage side switching unit 12 is driven, have a sinusoidal form and thereby functions to reduce switching loss and prevent FET breakdown due to a large current. This is because the FETs can be switched on and off near zero cross points of the sinusoidal current. The LC oscillator circuit 13 may be provided at the primary side instead of at the secondary side.

Switching control of the FETs Q9 to Q12 of the low voltage side switching unit 11 and the FETs Q13 to Q16 of the high voltage side switching unit 12 is performed by the controller 8. The capacitors 14 and 15 that are connected to the primary side and the secondary side are output smoothing capacitors.

During operation, the low voltage side switching unit 11 and the high voltage side switching unit 12 are driven by the same signal and synchronized completely so that the isolation-type DC-DC converter 9 performs bidirectional power conversion automatically As is well-known, this drive is performed by alternately turning on and off the pair of FETs Q9 and Q12 and the pair of FETs Q10 and Q11 at the low voltage side switching unit 11 and alternately turning on and off the pair of FETs Q13 and Q16 and the pair of FETs Q 14 and Q 15 at the high voltage side switching unit 12.

In startup of the engine, power conversion from the primary side to the secondary side of the isolation-type DC-DC converter 9 is performed, and the DC voltage of the battery 4 that is thereby stepped up is provided to the rectifier unit 51 serving as the drive inverter. The rectifier unit 51 performs PWM drive of Q1 to Q6 in a well-known manner and thereby converts the input DC voltage to a three-phase AC voltage and applies the AC voltage to the alternator 3. The engine 2 is thereby started. In this process, change of current distribution by a back voltage that arises in accordance with the operation of the alternator 3 can be used to judge the phase and perform synchronous drive by sensorless control.

When the engine 2 is started, the alternator 3 is driven by the engine to generate an output. At this point, the FETs Q1 to Q3 of the rectifier unit 51 are not driven and the output of the alternator 3 is rectified by the diodes D1 to D3 of the rectifier unit 51.

The output voltage of the rectifier unit 51 is smoothened and adjusted by the DC unit 52 and further converted to an AC power of a predetermined frequency (for example, the commercial power frequency) at the inverter unit 53. At the DC unit 52, PWM of the FET Q4 is performed in accordance with an operation signal from the controller 8.

The isolation-type DC-DC converter 9 is a bidirectional DC-DC converter and thus if the remaining capacity of the battery 4 is less than a predetermined value and the output of the alternator 3 is adequate, the battery 4 is charged by the output voltage of the rectifier unit 51 being stepped down by the isolation-type DC-DC converter 9 and input into the battery 4. Also, in a case where the remaining capacity of the battery 4 is high, power from the battery 4 is also supplied to the load through the isolation-type DC-DC converter 9 to compensate (assist) the output power of the alternator 3.

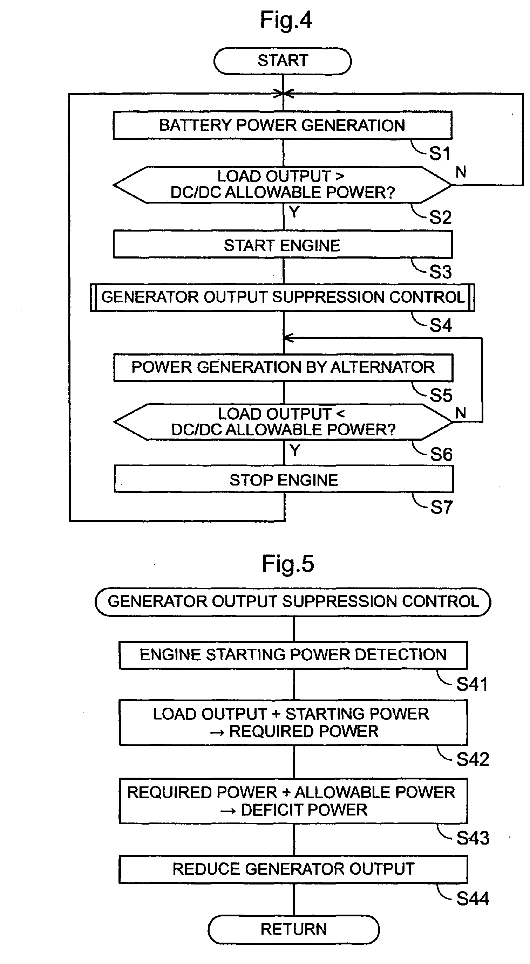

Power supply source switching control of the hybrid engine generator 1 shall now be described. FIG 4 is a flowchart of an output control operation. This operation can be realized by the microcomputer inside the controller 8. In step S1 of FIG 4, the isolation-type DC-DC converter 9 is made to operate to output the power of the battery 4 to the DC unit 52. This enables power to be supplied to the load, connected to the outlet 6, by the voltage from the battery 4 (battery power generation).

In step S2, it is judged whether or not a power demand from the load, that is, the load output exceeds an allowable power of the isolation-type DC-DC converter 9. Output from the battery 4 is continued while the judgment result is negative. If an affirmative judgment is made at step S2, that is, if the load output reaches a value that is set close to an upper limit of the allowable power of the isolation-type DC-DC converter 9, step S3 is entered to start the engine 2 and drive the alternator 3. After starting the engine 2, generator output suppression control is performed in step S4. Details of the generator output suppression control shall be described below.

In step S5, power generation with the alternator 3 as the power supply source is started. In step S6, it is judged whether or not the load output is below the allowable power of the isolation-type DC-DC converter 9. Power generation with the alternator 3 as the power supply source is continued while a negative judgment is made at step S6. If an affirmative judgment is made at step S6, step S7 is entered and the engine 2 is stopped. When the engine 2 is stopped, a return to step S1 is performed.

FIG 5 is a flowchart of the generator output suppression control. In step S41, an engine starting power is detected. The engine starting power is determined in advance by either or both of experiment and calculation. In step S42, the load output and the starting power of the engine 2 are added to compute a required power. In step S43, a difference (deficit power) between the required power and the allowable power of the isolation-type DC-DC converter 9 is computed. In step S44, PWM control of the inverter unit 53 is performed to reduce the generator output (output of the inverter unit 53) by just the deficit power. By this control, the generator output is maintained in a suppressed state while securing the starting power of the engine 2. When the engine 2 starts in the state where the generator output is suppressed by the generator output suppression control and the engine rotation speed reaches a predetermined rotation speed (when the engine enters a started state), the output of the battery 4 is stopped and switching to power generation with the alternator 3 as the power supply source is performed.

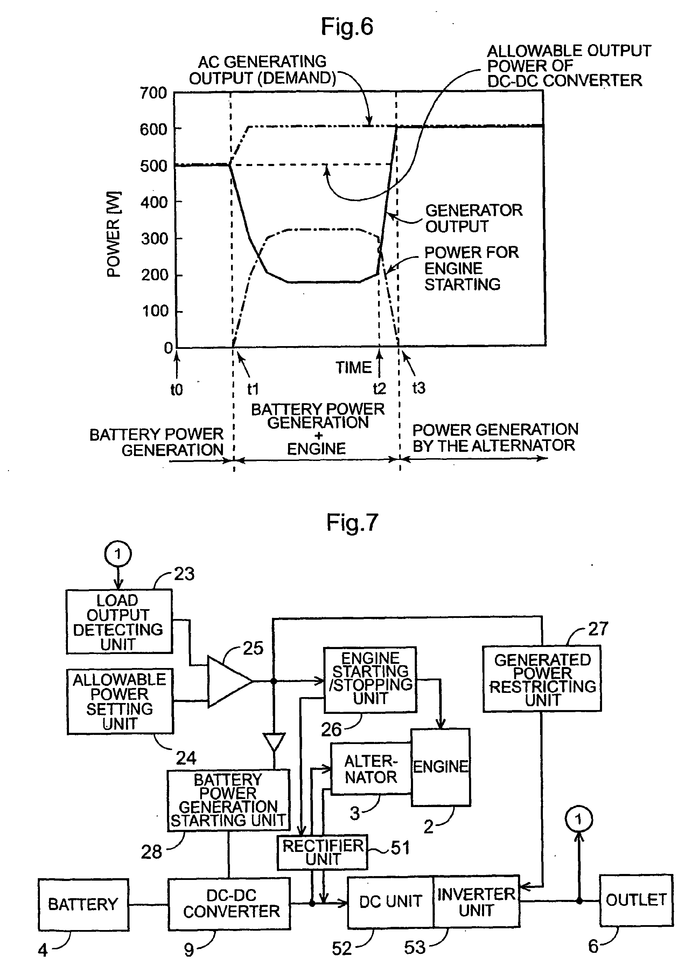

FIG. 6 is a timing chart of the power supply source switching control. From timing t0 to t1in FIG 6, power supply (battery power generation) by the battery 4 is performed. At the timing t1, a load output exceeding the power generation capability of the battery 4, that is, the allowable power of the isolation-type DC-DC converter 9 arises, and the engine 2 is started by the output of the battery 4 at the timing t1. At the same time, the inverter unit 53 is controlled to reduce the output of the battery 4, that is, the generator output at this point. At a timing t2, the engine 2 is in the started state and the power for engine starting begins to decrease, and the output unit 52 is thus controlled to increase the generator output. At a timing t3, the generator output increases to match the load output, the isolation-type DC-DC converter 9 is controlled so that the output of the battery 4 stops, and only the output of the alternator 3 driven by the engine 2 becomes the generator output.

FIG 7 is a block diagram of principal functions of the power supply source switching apparatus. In FIG. 7, a load output detecting unit 23 detects the load output based on the output current and the output voltage of the inverter unit 53. An allowable power value setting unit 24 is a means that sets the allowable output power value of the isolation-type DC-DC converter 9 in advance. A comparing unit 25 compares the load output detected by the load output detecting unit 23 and the allowable power value and turns on a comparing unit output when the load output is greater than the allowable power value and turns off the comparing unit output when the load output is less than the allowable power value.

An engine starting/stopping unit 26 performs, in response to the turning on of the comparing unit output, switching control of the rectifier unit 51 as the drive inverter so that the output of the isolation-type DC-DC converter 9 is supplied to the alternator 3. The alternator 3 is driven by the voltage of the battery 4 that is applied through the rectifier unit 51 and thereby starts the engine 2. With the starting of the engine 2, a generated power restricting unit 27 is energized in response to the turning on of the comparing unit output, and PWM control of the inverter unit 53 is performed to restrict its output voltage. The restriction of the output voltage is performed in consideration of the starting power of the engine 2. If the load output is less than the allowable power value, that is, if the comparing unit output is off, a battery power generation starting unit 28 is energized and a voltage is applied from the battery 4 to the inverter unit 53 via the isolation-type DC-DC converter 9 and the DC unit 52. At the same time, an engine starting/stopping unit 26 stops the engine 2 (stops both or either of ignition and fuel supply).

As described above, with the present embodiment, when the load increases and the capacity of the isolation-type DC-DC converter 9 is about to become deficient, switching from the battery-based power supplying system to the alternator-based power supplying system is performed. In the process of switching, the generator output, that is, the output of the inverter unit 53 is lowered temporarily in consideration of the starting power of the engine and, the alternator 3 is started by the output power from the battery 4 to start the engine. The output from the battery 4 is thereby balanced as the power for the load and the power for starting the engine.

### Reference Signs List

- 1: hybrid engine generator
- 2: engine
- 3: alternator
- 4: battery
- 5: power conversion unit
- 7: load
- 8: controller
- 9: isolation-type DC-DC converter
- 23: load output detecting unit
- 24: allowable power setting unit
- 25: comparing unit
- 26: engine starting/stopping unit
- 27: generated power restricting unit

Usability is improved and noise and fuel consumption are lowered by preventing stopping of a generator output. A hybrid power generator (1) includes a battery (4) an alternator (3), a rectifier unit (51), a DC-DC converter (9) stepping up an output of the battery (4), and an inverter unit (53) converting outputs of the rectifier unit (51) and the DC-DC converter (9) to AC and outputting the AC as a generator output. At a time when a load output reaches an upper limit of an allowable power range of the DC-DC converter (9), the engine (2) is started and power supplying from the battery (4) is switched to power generation by the alternator (3). A generated power restricting unit (27) suppresses the output of the inverter unit (53) during the starting of the engine so that the generator outputs allowable power range of the DC-DC converter (9).

## Claims

1. A power supply source switching apparatus for a hybrid power generator, which includes a battery (4), an alternator (3) driven by an engine (2), a rectifier unit (51) rectifying an output of the alternator (3), a DC-DC converter (9) stepping up an output voltage of the battery (4), and an inverter unit (53) converting outputs of the rectifier unit (51) and the DC-DC converter supplied via an output unit (52) to AC and outputting the AC as a generator output, the power supply source switching apparatus for a hybrid power generator comprising:
a load output adapted for detecting unit (23) detecting a load output of the generator,
an engine starting unit adapted for starting the engine (2) by the output of the battery (4); and
a generated power restricting unit (27) adapted for starting the engine (2) and
switching from power supplying from the battery (4) to power generation by the alternator (3) at a point in time at which the load output reaches an upper limit of an allowable power of the DC-DC converter (9), wherein
the generated power restricting unit (27) is further adapted for suppressing, at a first timing (t1), the output of the inverter unit (53) during the starting of the engine (2) for the switching so that the generator output does not exceed an allowable power range of the DC-DC converter (9), and when, at a second timing (t2), the engine (2) is in the started state and the power for engine starting begins to decrease, the output unit (52) is controlled to increase the generator output, and when, at a third timing (t3), the generator output increases to match the detected load output,
the DC-DC converter (9) is controlled so that the output of the battery (4) stops, and only the output of the alternator (3) driven by the engine (2) becomes the generator output.

2. The power supply source switching apparatus for a hybrid power generator according to Claim 1, wherein the rectifier unit (51) is used in common as a drive inverter (53) for starting the engine (2) by the output of the DC-DC converter (9), and
the generated power restricting unit (27) is arranged to perform output restriction of the battery (4) by subtracting power, corresponding to power consumed for engine starting, from the battery output.

3. The power supply source switching apparatus for a hybrid power generator according to Claim 1 or 2, wherein the engine (2) is stopped and switching to the output from the battery (4) is performed when the load output falls below the allowable output range of the DC-DC converter (9).

## Patentansprüche

1. Stromversorgungsquellenschaltvorrichtung für einen Hybridstromgenerator, der eine Batterie (4), einen von einem Motor (2) angetriebenen Wechselstromgenerator (3), eine Gleichrichtereinheit (51), die eine Ausgabe des Wechselstromgenerators (3) gleichrichtet, einen DC-DC-Wandler (9), der eine Ausgangsspannung der Batterie (4) hoch setzt, sowie eine Invertereinheit (53), die Ausgaben der Gleichrichtereinheit (51) und des DC-DC-Wandlers, die über eine Ausgabeeinheit (52) zugeführt werden, in Wechselstrom umwandelt und den Wechselstrom als Generatorausgabe ausgibt, wobei die Stromversorgungsquellenschaltvorrichtung für einen Hybridstromgenerator umfasst:
eine Lastausgabe, die ausgelegt ist, damit eine Erfassungseinheit (23) eine Lastausgabe des Generators erfasst;
eine Motorstarteinheit, die dazu ausgelegt ist, den Motor (2) durch die Ausgabe der Batterie (4) zu starten; und
eine Stromerzeugungsbegrenzungseinheit (27), die dazu ausgelegt ist,
den Motor (2) zu starten und von Stromversorgung von der Batterie (4) zur Stromerzeugung durch den Wechselstromgenerator (3) zu einem Zeitpunkt umzuschalten, zu dem die Lastausgabe eine Obergrenze der zulässigen Leistung des DC-DC-Wandlers (9) erreicht, worin die Stromerzeugungsbegrenzungseinheit (27) ferner dazu ausgelegt ist, zu einer ersten Zeit (t1) die Ausgabe der Invertereinheit (53) während des Startens des Motors (2) für das Umschalten zu unterdrücken, so dass die Generatorausgabe einen zulässigen Ausgabebereich des DC-DC-Wandlers (9) nicht überschreitet, und wenn zu einer zweiten Zeit (t2) der Motor (2) im gestarteten Zustand ist und die Ausgabe für den Motorstart abzunehmen beginnt, die Ausgabeeinheit (52) angesteuert wird, um die Generatorausgabe zu erhöhen, und wenn zu einer dritten Zeit (t3) die Generatorausgabe so zunimmt, dass sie zu der erfassten Lastausgabe passt, der DC-DC-Wandler (9) so angesteuert wird, dass die Ausgabe der Batterie (4) stoppt, und nur die Ausgabe des vom Motor (2) angetriebenen Wechselstromgenerators (3) zur Generatorausgabe wird.

2. Die Stromversorgungsquellenschaltvorrichtung für einen Hybridstromgenerator nach Anspruch 1, worin, wenn die Gleichrichtereinheit (51) gemeinsam als Antriebsinverter (53) zum Starten des Motors (2) durch die Ausgabe des DC-DC-Wandlers (9) verwendet wird, und
die Stromerzeugungsbegrenzungseinheit (27) angeordnet ist, um eine Ausgabebegrenzung der Batterie (4) durchzuführen, indem die Ausgabe, die der vom für den Motorstart verbrauchten Ausgabe entspricht, von der Batterieausgabe subtrahiert wird.

3. Die Stromversorgungsquellenschaltvorrichtung für einen Hybridstromgenerator nach Anspruch 1 oder 2, worin der Motor (2) gestoppt wird und das Umschalten zur Ausgabe von der Batterie (4) erfolgt, wenn die Lastausgabe unter den zulässigen Ausgabebereich des DC-DC-Wandlers (9) fällt.

## Revendications

1. Appareil de commutation de source d'alimentation électrique pour un générateur d'énergie hybride, qui comprend une batterie (4), un alternateur (3) entraîné par un moteur (2), une unité formant redresseur (51) redressant une sortie de l'alternateur (3), un convertisseur CC-CC (9) élevant une tension de sortie de la batterie (4) et une unité formant inverseur (53) convertissant les sorties de l'unité formant redresseur (51) et du convertisseur CC-CC fournies par le biais d'une unité de sortie (52) en courant alternatif et délivrant le courant alternatif en tant que sortie du générateur, l'appareil de commutation de source d'alimentation électrique pour un générateur d'énergie hybride comprenant :
une unité de détection de sortie de charge (23) conçue pour détecter une sortie de charge du générateur,
une unité de démarrage du moteur conçue pour démarrer le moteur (2) au moyen de la sortie de la batterie (4) ; et
une unité de limitation d'énergie générée (27) conçue pour démarrer le moteur (2) et commuter de l'alimentation électrique provenant de la batterie (4) sur la génération d'énergie au moyen de l'alternateur (3) à un moment où la sortie de charge atteint une limite supérieure d'une puissance admissible du convertisseur CC-CC (9),
dans lequel l'unité de limitation d'énergie générée (27) est en outre conçue pour supprimer, à un premier moment (t1), la sortie de l'unité formant inverseur (53) lors du démarrage du moteur (2) pour la commutation afin que la sortie du générateur ne dépasse pas une plage de puissance admissible du convertisseur CC-CC (9) et lorsque, à un deuxième moment (t2), le moteur (2) se trouve dans l'état démarré et que la puissance de démarrage du moteur commence à diminuer, l'unité de sortie (52) est contrôlée de sorte à augmenter la sortie du générateur et lorsque, à un troisième moment (t3), la sortie du générateur augmente pour s'adapter à la sortie de charge détectée, le convertisseur CC-CC (9) est contrôlé de sorte que la sortie de la batterie (4) s'arrête, et seule la sortie de l'alternateur (3) commandé par le moteur (2) devient la sortie du générateur.

2. Appareil de commutation de source d'alimentation électrique pour un générateur d'énergie hybride selon la revendication 1, dans lequel l'unité formant redresseur (51) est utilisée en commun comme inverseur de commande (53) pour démarrer le moteur (2) au moyen de la sortie du convertisseur CC-CC (9), et
l'unité de limitation d'énergie générée (27) est conçue pour assurer la limitation de la sortie de la batterie (4) en soustrayant l'énergie, correspondant à l'énergie consommée pour le démarrage du moteur, de la sortie de la batterie.

3. Appareil de commutation de source d'alimentation électrique pour un générateur d'énergie hybride selon la revendication 1 ou 2, dans lequel le moteur (2) est arrêté et la commutation sur la sortie de la batterie (4) est assurée lorsque la sortie de charge tombe en deçà de la plage de sortie admissible du convertisseur CC-CC (9).
